Europäisches Patentamt

**European Patent Office**

**Office européen des brevets**

(11) Veröffentlichungsnummer: **0 233 356**

**A1**

(12) **EUROPÄISCHE PATENTANMELDUNG**

(21) Anmeldenummer: **86117569.3**

(22) Anmeldetag: **17.12.86**

(51) Int. Cl.⁴: **B62D 49/08**

(30) Priorität: **21.01.86 US 821386**

(43) Veröffentlichungstag der Anmeldung:
**26.08.87 Patentblatt 87/35**

(84) Benannte Vertragsstaaten:
**DE FR GB**

(71) Anmelder: **DEERE & COMPANY**
**1 John Deere Road**
**Moline Illinois 61265(US)**

(72) Erfinder: **Brimeyer, Dennis Arthur**
**1205 Pamela Court**
**Dubuque Iowa 52001(US)**
Erfinder: **Maneman, Terrence Henry**
**3033 Westmore**
**Dubuque Iowa 52001(US)**

(74) Vertreter: **Feidmann, Bernhard**
**DEERE & COMPANY European Office, Patent**
**Department Steubenstrasse 36-42 Postfach 503**
**D-6800 Mannheim 1(DE)**

(54) **Ballastgewichteanordnung in dem Frontbereich eines Kraftfahrzeuges.**

(57) Bei Kraftfahrzeugen, insbesondere bei Arbeitsmaschinen, ist es oft erforderlich, deren Frontbereich (19) zu ballastieren, damit z. B. eine größere Zugkraft auf den Boden übertragen werden kann.

Herkömmliche Ballastgewichteanordnungen erstrecken sich jedoch relativ weit nach vorne über das Kraftfahrzeug hinaus, so daß große Biegemomente entstehen.

Es wird daher eine Ballastgewichteanordnung geschaffen, deren Ballastgewichte (36) in der Größe und Form einer Frontfläche (21) des Kraftfahrzeuges ausgebildet sind und quer zur Fahrtrichtung in Sandwichbauweise großflächig an die Frontfläche (21), gegebenenfalls zusammen mit einer Zusatzausrüstung (27), angebracht werden.

FIG. 1

## Ballastgewichteanordnung in dem Frontbereich eines Kraftfahrzeuges

Die Erfindung betrifft eine Ballastgewichteanordnung in dem Frontbereich eines Kraftfahrzeuges, insbesondere eines Ackerschleppers, eines Bau-oder eines Forstfahrzeuges, mit mindestens einem sich quer zur Fahrtrichtung vertikal erstreckenden Ballastgewicht.

Bei dieser bekannten Ballastgewichteanordnung (DE-B-1 263 520) sind an einem Vorderachslagerbock einer landwirtschaftlichen Zugmaschine mehrere Ballastgewichte und ein Zugmaul mittels langer Schrauben befestigt. Die Ballastgewichte erstrecken sich quer zur Fahrtrichtung und weisen Nocken auf, die in entsprechende Löcher eines benachbarten Ballastgewichtes oder in den Vorderachslagerbock eingesetzt werden.

Diese Ballastgewichteanordnung ist insofern nachteilig, als die Ballastgewichte aufgrund ihrer gedrungenen Bauweise und der Anbringung zum Teil unterhalb des Motors und der Frontverkleidung sich weit nach vorne erstrecken müssen, wenn sie eine große Ballastierung erbringen sollen, woraus sich jedoch ungünstige Biegemomente in der Ballastgewichteanordnung ergeben.

Die der Erfindung zugrunde liegende Aufgabe wird darin gesehen, eine Ballastgewichteanordnung mit sich quer zur Fahrtrichtung erstreckenden Ballastgewichten zu schaffen, die eine bestmögliche Ballastierung unter Vermeidung der bekannten ungünstigen Biegemomente ergibt.

Diese Aufgabe ist erfindungsgemäß durch die Lehre gemäß Patentanspruch 1 gelöst worden, da auf diese Weise die horizontalen und vertikalen Abmessungen nicht durch den Motoraufbau oder Radeinschlagswinkel an einer Vorderachse wie bei dem Stand der Technik eingeschränkt werden. Vielmehr erstrecken sich die Ballastgewichte über die gesamte Frontfläche des Kraftfahrzeuges, so daß bei geringerer Dicke die gleiche oder gar eine größere Gewichtskraft aufgebracht werden können, was sich auch bei der Ausbildung gemäß Patentanspruch 3 optisch nicht nachteilig auswirkt.

Eine Optimierung von Werkstoffen wird insbesondere durch die Lehre gemäß Patentanspruch 2 erreicht, wobei das als Frontfläche ausgebildete Ballastgewicht gegebenenfalls mit Typenbezeichnungen oder dergleichen versehen sein kann.

Die weiteren in den Patentansprüchen genannten Merkmale führen zu vorteilhaften konstruktiven Lösungen, die es insbesondere ermöglichen, die Ballastgewichte mittels eines Krans oder eines Seilzuges anzuheben; jedoch wird dadurch auch die Handhabe erleichtert, weil anstatt eines Krans eine Person diese Ballastgewichte anheben und sie so sicher greifen kann. Auch die Ausführung der Öffnungen und Halter führt zu einer einfachen Montage, wobei zum Einfügen eines Ballastgewichtes zwischen die Frontfläche und die Zusatzausrüstung, etwa eine Dreipunktkupplung, oder zwischen zwei Ballastgewichte oder zwischen ein Ballastgewicht und die Frontfläche nur die Hälfte der Halter entfernt werden muß, so daß das Ballastgewicht seitlich mit seinen am Rand offenen Öffnungen über die Halter geschoben werden kann.

In der Zeichnung ist ein nachfolgend näher beschriebenes Ausführungsbeispiel der Erfindung dargestellt. Es zeigt:

Figur 1 einen Frontbereich eines Kraftfahrzeuges mit einer Frontfläche und

Figur 2 eine erfindungsgemäße Ballastgewichteanordnung, die an der Frontfläche nach Figur 1 angebracht ist.

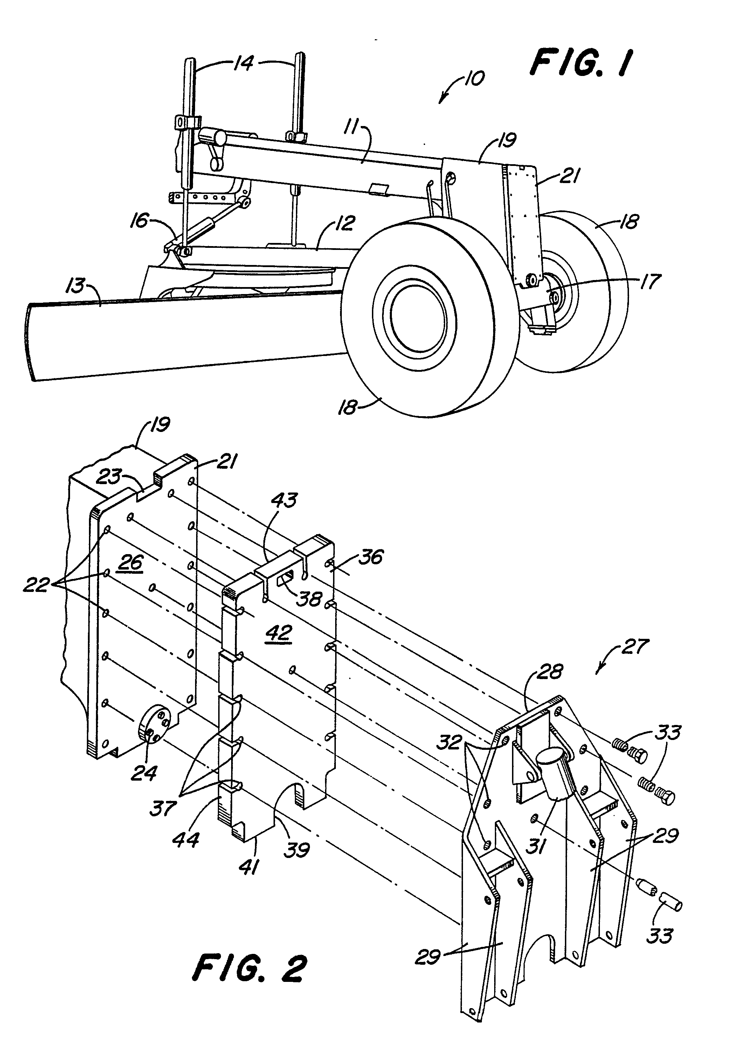

In Figur 1 ist ein Kraftfahrzeug 10 in der Art eines Graders gezeigt, das einen Hauptrahmen 11 mit einer Rotationseinheit 12 und einem daran befindlichen Schild 13 aufweist. Der Schild 13 ist mit Hubzylindern 14 versehen, und ein Hydraulikzylinder 16 ist vorgesehen, um den Schild 13 seitwärts zu bewegen. Ferner enthält das Kraftfahrzeug 10 in seinem Frontbereich 19 eine Vorderachse 17 zur Aufnahme von Vorderrädern 18.

Selbstverständlich kann die Erfindung nicht nur bei Gradern angewendet werden, sondern sie kann vielmehr auch bei Ackerschleppern, selbstfahrenden Arbeits-und Erntemaschinen, Baufahrzeugen und Forstfahrzeugen Verwendung finden.

An dem Frontbereich 19 ist eine Frontfläche 21 mittels nicht gezeigter Halteelemente an dem Kraftfahrzeug 10 angebracht, die eine Vielzahl von Öffnungen 22 in einer vorbestimmten Form enthält und die sich über den gesamten Frontbereich der Frontverkleidung erstreckt. Die Frontfläche 21 ist an ihrem oberen Rand ferner mit einer Aussparung 23 versehen, und ein Vorderachspendellager 24 erstreckt sich durch sie in ihrem unteren Randbereich. Die der Vorderseite des Kraftfahrzeuges 10 zugelegene Fläche 26 der Frontfläche 21 ist relativ flach und plan mit Ausnahme im Bereich des Vorderachspendellagers 24.

Ein Teil einer Zusatzausrüstung 27, wie er aus Figur 2 ersichtlich ist, enthält Konsolen 28 mit einer relativ flachen und planen rückwärtigen Fläche, die derart angepaßt ist, daß sie mit der Fläche 26 der Frontfläche 21 zusammenpaßt. Es sind zwei Paar Laschen 29 an der Vorderseite der Zusatzausrüstung 27 angeschweißt, um in herkömmlicher Weise ein Gerät, wie einen Schneepflug, einen Bodenaufreißer, eine Kehrmaschine, eine Bodenbearbeitungsmaschine oder dergleichen, aufzunehmen und zu tragen, wozu unter anderem auch ein Hydraulikzylinder 31 zum Ausführen einer Hubbewegung vorgesehen ist. Außerdem sind in der Zusatzausrüstung 27 Öffnungen 32 enthalten, durch die sich als Schrauben ausgebildete Halter 33 erstrecken. Da die Öffnungen 32 deckungsgleich mit den Öffnungen 22 in der Frontfläche 21 angeordnet sind, kann die Zusatzausrüstung 27 dadurch an der Frontfläche 21 befestigt werden, daß die Halter 33 durch die Öffnungen 32 gesteckt und in die Öffnungen 32 eingeschraubt werden. Jedoch könnten anstatt von Schrauben auch federbelastete Spannelemente verwendet werden.

Ein oder mehrere Ballastgewichte 36 können zwischen die Zusatzausrüstung 27 und die Frontfläche 21 eingefügt werden, wie dies anschaulich aus Figur 2 hervorgeht, wobei die Ballastgewichte 36 identisch zueinander ausgebildet sind, weshalb im folgenden nur eines beschrieben wird. Das Ballastgewicht 36 ist quaderförmig, so daß seine Form in der Seitenansicht zumindest im wesentlichen identisch ist zu der Form der Frontfläche 21. Gegebenenfalls kann auch die Frontfläche 21 bereits als Ballastgewicht 36 ausgebildet sein, was durch eine entsprechende Dicke und durch die Verwendung spezifisch schweren Materials möglich ist, so daß bereits in der Grundausrüstung des Kraftfahrzeuges 10 eine bestimmte Ballastierung der Vorderachse 17 gegeben ist. In das Ballastgewicht 36 sind mehrere Öffnungen 37 eingearbeitet, die zu den Öffnungen 22 und 32 in der Frontfläche 21 und in der Zusatzausrüstung 27 in Deckung gebracht werden können, so daß das Ballastgewicht 36 zwischen die Frontfläche 21 und die Zusatzausrüstung 27 eingeschoben und mittels der Halter 33, die durch die Öffnungen 37 gesteckt werden, gehalten werden kann.

Eine größere Ausnehmung 38 ist in den oberen Randbereich des Ballastgewichtes 36 eingearbeitet und kann mit der Aussparung 23 in der Frontfläche 21 in Deckung gebracht werden, um mittels eines in die Ausnehmung 38 eingehängten Kranhakens oder dergleichen das Ballastgewicht 36 anzubringen. Gegebenfalls kann die Ausnehmung 38 auch als Griffmuschel für eine Hand dienen, wenn das Ballastgewicht 36 von Hand an seinen Platz gehoben wird. In manchen Fällen kann auf die Zusatzausrüstung 27 verzichtet werden; aber auch dann werden ein oder mehrere Ballastgewichte 36 mittels derselben Halter 33 an der Frontfläche 21 befestigt. Dabei haben die Halter 33 entweder unterschiedliche Längen oder sie erstrecken sich über die Frontfläche 21 hinaus. Ein mehr oder weniger halbkreisförmiger Ausschnitt 39 ist in den unteren Randbereich 41 des Ballastgewichtes 36 eingearbeitet, und zwar derart, daß dieser Ausschnitt 39 das sich durch die Frontfläche 21 erstreckende Vorderachspendellager 24 umgreift.

Eine vordere und eine rückwärtige Fläche 42 und 43 des Ballastgewichtes 36 sind relativ flach und plan und passen an die vordere Fläche 26 der Frontfläche 21 bzw. an die rückwärtige Fläche der Zusatzausrüstung 27. Auf diese Weise und durch die deckungsgleiche Anordnung der Öffnungen 22, 32, 37 können die Frontfläche 21, das oder die Ballastgewichte 36 und die Zusatzausrüstung 27 mittels der Halter 33 ohne das Erfordernis weiterer Mittel zusammengehalten werden.

Aus Figur 2 geht hervor, daß die Öffnungen 37 als Längsnuten ausgebildet sind, die sich bis zu den Umfangskanten 44 des Ballastgewichtes 36 erstrecken. Ein gleichmäßiges, fortschreitendes Brennschnittverfahren wird an den Umfangskanten 44 jedes Ballastgewichtes 36 angewendet, um die Öffnungen 37 wie auch die Ballastgewichte 36 selbst zu formen, was sich als sehr wirksam und kostengünstig erwiesen hat.

## Ansprüche

1. Ballastgewichteanordnung in dem Frontbereich (19) eines Kraftfahrzeuges (10), insbesondere eines Ackerschleppers, eines Bau-oder eines Forstfahrzeuges, mit mindestens einem sich quer zur Fahrtrichtung vertikal erstreckenden Ballastgewicht (36), dadurch gekennzeichnet, daß das Ballastgewicht (36) flächig an einer sich über den Frontbereich (19) des Kraftfahrzeuges (10) oder dessen Frontverkleidung erstreckenden Frontfläche (21) anliegt.

2. Ballastgewichteanordnung nach Anspruch 1, dadurch gekennzeichnet, daß ein Ballastgewicht - (36) die Frontfläche (21) der Frontverkleidung bildet.

3. Ballastgewichteanordnung nach Anspruch 1, dadurch gekennzeichnet, daß das oder die Ballastgewicht(e) (36) deckungsgleich zu der Frontfläche (21) der Frontverkleidung ausgebildet ist (sind).

4. Ballastgewichteanordnung nach Anspruch 1 mit einer Zusatzausrüstung (27), die an der Frontfläche (21) des Kraftfahrzeuges (10) oder an einem an dieser vorgesehenen Ballastgewicht (36) anbringbar ist.

5. Ballastgewichteanordnung nach einem oder mehreren der Ansprüche 1, 3 und 4, wobei zu Befestigungszwecken in der Frontfläche (21), in der Zusatzausrüstung (27) und in dem(n) Ballastgewicht(en) (36) sich deckende Öffnungen - (22, 32, 37) und Halter (33) vorgesehen sind.

6. Ballastgewichteanordnung nach einem oder mehreren der vorherigen Ansprüche, dadurch gekennzeichnet, daß die Frontfläche (21) oder das sie bildende Ballastgewicht (36) in ihrem oberen Randbereich eine Aussparung (23) aufweist.

7. Ballastgewichteanordnung nach Anspruch 6, dadurch gekennzeichnet, daß jedes Ballastgewicht (36) in seinem oberen Randbereich eine sich mit der Aussparung (23) deckende Ausnehmung (38) zur Anbringung an ein Hebezeug aufweist.

8. Ballastgewichteanordnung nach Anspruch 5, dadurch gekennzeichnet, daß die Öffnungen (37) in die aus flachen Metallplatten gebildeten Ballastgewichte (36) von deren Umfangskanten (44) her eingebrannt werden.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 000 696 (STEYR-DAIMLER-PUCH AG) * Figuren 1, 4; Seite 7, Zeilen 15-22 * | 1,3 | B 62 D  49/08 |
| Y | | 2,4-7 | |
| | --- | | |
| Y | US-A-4 029 340  (CHELIN) * Figur 1; Spalte 2, Zeilen 31-34 * | 2 | |
| | --- | | |
| Y | FR-A-2 117 159 (KLÖCKNER-HUMBOLDT-DEUTZ AG) * Figur 4; Seite 3, Zeile 40 - Seite 4, Zeile 13 * | 4 | |
| | --- | | |
| Y | US-A-3 517 941  (LAZZERONI) * ganze Schrift * | 5 | **RECHERCHIERTE SACHGEBIETE (Int. Cl.4)** |
| A | | 1,3 | B 62 D  49/00 |
| | --- | | |
| Y | FR-A-2 406 562  (FONDERIE D'EQUIPEMENT GENERAL) * Figur 1; Seite 1, Zeile 36 - Seite 2, Zeile 1 * | 6,7 | |
| | ----- | | |

Der vorliegende Recherchenbericht wurde für alle Patentansprüche erstellt.

| Recherchenort BERLIN | Abschlußdatum der Recherche 15-04-1987 | Prüfer JAIK |
|---|---|---|